# EUROPEAN PATENT SPECIFICATION

(11) **EP 3 470 296 B1**
(45) Date of publication and mention of the grant of the patent: **01.09.2021**
(21) Application number: 17196391.1
(22) Date of filing: 13.10.2017
(51) Int. Cl.: B61G 5/10, H02G 11/00

(54) **HIGH VOLTAGE INTERCONNECTION SYSTEM**
HOCHSPANNUNGSVERBINDUNGSSYSTEM
SYSTÈME D'INTERCONNEXION HAUTE TENSION

(43) Date of publication of application: 17.04.2019
(73) Proprietor: Tyco Electronics UK Ltd, Wiltshire SN3 5HH (GB)
(72) Inventor: Jaskiewicz, Piotr, Bristol BS5 9AP (GB); Phillpotts, Robert, Swindon, SN3 4QB (GB)
(74) Representative: Grünecker Patent- und Rechtsanwälte PartG mbB

(56) References cited:
- EP-A1- 2 665 147
- WO-A1-2016/119509
- WO-A1-2016/150852
- JP-U- H0 651 045
- US-A- 5 216 285

## Description

The invention relates to an assembly comprising at least two train cars which are coupled with each other via a high-voltage interconnection system for electrically interconnecting the coupled train cars, wherein the interconnection system comprises at least one flexible cable, at least one connection arrangement for electrically contacting one end of the at least one flexible cable, and at least one cable holder arrangement, the at least one cable holder arrangement which holds the at least one cable in a slidable manner, wherein the at least one cable holder arrangement comprises at least one holding member comprising at least one guiding opening for receiving the at least one flexible cable at least in parts, the holding member providing a cage- or frame-like structure which is formed by two side walls which are arranged opposite to each other and a top wall which interconnects the two side walls, and wherein the at least one cable holder arrangement comprises at least one sliding collar fixated on the flexible cable. At least one of the train cars is provided with at least one connection arrangement for electrically contacting one end of at least one flexible cable, the at least one connection arrangement comprising at least one connection element being fixated to the corresponding train car, and wherein at least one flexible cable is electrically connected to the at least one connection arrangement and extends at least towards the other train car, wherein at least one of the train cars is provided with at least one cable holder arrangement and wherein the at least one connection arrangement, the at least one flexible cable and the at least one cable holder arrangement are part of the high voltage interconnection system.

Systems for electrically interconnecting two objects that are movable relative to each other, in particular coupled train cars, are known in the art. Such systems are, just by way of example, arranged on a roof of a train or under a bottom of a train and electrically interconnect electrical systems of a train such as electric power systems or electronic components. Known high voltage connection systems use large high voltage outdoor post insulators or else rigid high voltage terminations on the train cars on which cables are mounted that interconnect the train cars. Such systems may have several drawbacks. Firstly, the systems usually occupy large amounts of space. The post insulators/terminations need to be large enough to separate conductors from components of the train. Further, such systems are often not protected against accidental contact. Finally, in particular the systems comprising post insulators/terminations have a complicated structure for providing the required movability which is needed to provide an electrical connection even when the two objects, in particular the train cars, move with respect to each other.

A cable guide is known from WO 2016/150852 A1. The cable is led through a series of brackets for guiding the cable and allowing a partial movement of the cable. A cable guide system with a protective sleeve on the cable is known from JP H06 51045 U. The sleeve extends through a holding bracket such that the sleeve with the cable may partially move with respect to the holding bracket. From US 5,216,285 A, an electrical power distribution for a freight car is known, wherein electric power is distributed via flexible cables between different cars.

It is therefore an object of the invention to overcome the aforementioned problems and to provide an assembly with an interconnection system which are compact, easy to assemble and/or to install, which improve the stability and life of an electrical connection and, finally, which reduce the risks of unintentional contacts with electrically conductive parts.

For the assembly as mentioned in the beginning, the object is solved in that the flexible cable with the sliding collar extends through the guiding opening of the holding member such that the sliding collar is arranged inside the holding member, wherein the at least one flexible cable with the sliding collar is held by the at least one holding member such that a vertical movement is prevented but a horizontal movement at least partially allowed.

The flexible cable provides a conductor that is capable of following movements of the two objects, in particular of the coupled train cars, such that the electrical connection is assured. The connection arrangement allows the at least one flexible cable to be easily connected to the train, in particular to an electrical system of the train. The at least one cable holder is capable of holding the at least one flexible cable in a slidable manner and therefore allows the cable to move at least within certain limits. This movability is beneficial for counterbalancing deformations of the flexible cable during movements of the objects relatively to each other. The connection arrangement according to the invention preferably comprises at least one connection element which can be fixated to an object, in particular to a train car. To this connection element, a counter-connection element may be coupled which may be fixated to one end of the flexible cable. In particular, at least one connection element and at least one counter-connection element of the at least one connection arrangement may together form a plug connection. The high voltage interconnection system according to the invention forms a versatile system which can be easily adapted for different requirements which may depend on the objects, in particular on the train cars to which the system is to be installed. By using at least one connection arrangement, post insulators or rigid high voltage cable terminations may be omitted such that the safety and the compactness of the system are improved.

In the following, further improvements of the invention are described. The additional improvements may be combined independently of each other, depending on whether a particular advantage of a particular improvement is needed in a specific application. The improvements relating to the high voltage interconnection system may directly be applied to the assembly according to the invention and vice versa.

The at least one connection arrangement may be provided with a connection element that comprises at least two bushings. Said bushings may be adapted for receiving a connector which may in particular be formed by the counter-connection element on at least one end of the flexible cable.

The at least two bushings of the connection element are preferably arranged parallel with each other such that the connection element has an overall U-shape, wherein the at least two bushings form the legs of the U. Other beneficial arrangements of the connection element may provide two bushings which are arranged with a 90-degree angle between two bushings or an inline arrangement, in which the two bushings are arranged parallel with each other but extend in opposite directions. Each bushing may define a plug direction for a plug connection with the counter-connection element. Preferably, the plug direction is arranged horizontally such that it is parallel with a plane of a roof of a train car.

The at least one counter-connection element may have an overall shape of a T, such that a plug direction is basically perpendicular to a cable direction defined by the cable at least in the vicinity of the counter-connection element.

In order to interconnect more than two cables by a single connection element that is provided with two bushings, the counter connection elements may be formed in an interconnectable manner. These counter connection elements may differ from the aforementioned embodiments in that two counter connection elements can be coupled to form a connection assembly. In particular, these counter-connection elements may be screened separable coupling connectors. Such a connection assembly formed by two counter connection elements can be connected to a single bushing of a connection element. It should be noted that such a connection assembly can be used with connection elements that are provided with any number of bushings.

In order to form a simple and compact cable holder arrangement, the arrangement comprises at least one holding member comprising at least one guiding opening for receiving the at least one flexible cable at least in part. In other words, the at least one holding member may surround the at least one flexible cable at least partially. The at least one flexible cable extends through the at least one guiding opening such that it is slidable at least along a cable direction. Preferably, the at least one flexible cable is also at least partially movable perpendicular to the cable direction.

The at least one flexible cable is held by the at least one holding member such that a vertical movement is prevented but a horizontal movement at least partially allowed.

In order to improve the movability of the at least one flexible cable in the at least one cable holder arrangement and in order to protect the at least one flexible cable from damages induced by sliding along other parts, the at least one cable holder arrangement comprises at least one sliding collar fixated on the flexible cable. In particular, the at least one sliding collar may have an overall shape of a bushing or a ring which extends around the flexible cable. If the cable holding arrangement comprises at least one holding member, then the at least one sliding collar is preferably fixated on a cable such that the sliding collar moves in the at least one guiding opening of the holding member. The at least one cable holder arrangement preferably also comprises at least one wear-plate fixated to a roof in the region of the at least one sliding collar.

The at least one holding member, the at least one wear-plate and/or the at least one sliding collar are preferably made from a low friction plastic material, in particular a hard plastic material. Thereby, the term *"hard"* refers to the material being at least harder than typical rubber material. The plastic material may, in particular, be a thermoplastic material such that the elements may be formed by injection moulding. Using a plastic material, in particular a hard plastic material, may increase the lifetime of the corresponding element and, at the same time, reduce friction between the elements, thereby facilitating the movement.

The at least one connection arrangement may be housed in at least one protection cover that covers the at least one connection arrangement such that unintended contact, in particular by a finger or a tool or a flying object, is prevented. The at least one protection cover is preferably provided with through holes for at least one, more preferably at least two, flexible cables. The at least one protection cover may, in particular, be adapted for being fixated between two train cars, in particular being fixated to a wall of one of the train cars, or be adapted for being fixated on a roof of a train car

The at least one flexible cable preferably comprises a central flexible conductor to carry the high voltage with an insulating layer surrounding the flexible conductor in a circumferential direction, also an electrically conductive screen layer over the insulation that is connected to ground potential, and finally with an outer protective insulating jacket, this method of insulation allowing the high voltage cable to make intimate contact with the car body and other grounded objects without electrical discharges occurring. The at least one connection arrangement is preferably also provided with insulating means that includes a grounded electrical screen covering such that the high voltage connection arrangement can make intimate contact with the car body and other grounded objects without electrical discharges occurring, at least when the at least one counter-connection element is connected to the at least one connection element.

The assembly according to the invention may further be improved in that at least one of the train cars is provided with at least one cable holder which holds the at least one flexible cable in a slidable manner.

It should be noted that the term *"train cars"* may refer to a passenger car, a freight car, a locomotive or other cars that can be coupled with each other. Of course, it may also refer to a truck and a trailer which together form a type of train.

Each train car may be provided with at least one connection arrangement, the connection arrangements of the train cars being interconnected by the at least one flexible cable. Consequently, the at least one flexible cable may electrically interconnect the train cars, in particular high voltage electrical systems of the train cars.

The connection arrangements may, for example, be arranged on the roofs of the train cars, under the roofs of the train cars or under the bottoms of the train cars. An assembly, which comprises at least one connection arrangement on each train car, is preferably provided with at least one cable holder arrangement on each train car as well, wherein the at least one flexible cable extends through both cable holders such that the flexible cable is held in a slidable manner on both train cars.

In order to provide a compact arrangement, the at least one flexible cable is preferably arranged basically horizontally, at least in a region between the at least two connection arrangements. The basically horizontal arrangement may allow slight deviations due to the gravitational force. For example, sagging of the at least one flexible cable of about one to three times the outer diameter of the flexible cable may be allowed.

In particular, an assembly as described before, wherein each of the train cars is provided with at least one connection arrangement, may be provided with at least one connection arrangement that comprises at least one connection element and at least one counter-connection element which are formed as complementary plug connectors with a basically horizontally aligned plug directions. As a consequence, the interconnection system of the assembly is basically arranged along a horizontal plane, thereby saving vertical space which may be advantageous, in particular for underground or double-deck trains.

Preferably, the at least one flexible cable is arranged along a curved path at least in a region between the at least two connection arrangements, the curved path basically extending along a horizontal plane. The curved path may facilitate a flexible movement of the at least one cable when the at least two train cars move with respect to each other. The arrangement along the horizontal plane may be advantageous in keeping the overall horizontal arrangements of the components as described before, thereby reducing the space needed for the system, at least in a vertical direction. In particular, the curved path may be formed by one bend of the flexible cable such that the flexible cable has an overall U-shape seen perpendicular to the horizontal direction.

The curved path may also comprise two bends such that the flexible cable has an overall S-shape or three bends such that the cable has an overall shape of a U with legs that are bent towards the two connection arrangements.

In order to provide a movability of the at least one flexible cable, in particular when the flexible cable is arranged along a curved path, the at least one cable holder arrangement and at least one connection arrangement may be offset with respect to each other along a lateral direction perpendicular to a drive direction of the train cars. Said drive direction is basically identical to a coupling direction of the train cars or, in other words, to a longitudinal direction of the train and of the assembly.

According to another advantageous improvement, the at least one connection arrangement may be arranged between the at least two train cars. From the at least one connection arrangement, at least one flexible cable can extend onto the roof of each of the train cars. Such a connection arrangement is preferably provided with at least one protection cover, protecting the connection arrangement from unintended contact.

According to a further advantageous embodiment, at least two connection arrangements may be provided between two adjacent train cars, wherein each connection arrangement is arranged on one of the train cars. In particular, each connection arrangement may be fixated on a wall of the corresponding train cars, wherein the walls of both train cars are arranged opposite to each other. Each of the connection arrangements is then preferably provided with a flexible cable extending from the connection arrangement to the roof of the corresponding train car. Further, both connection arrangements are interconnected by at least one further flexible cable.

In the following, the invention and its improvements are described in greater detail using exemplary embodiments and with reference to the drawings. As described above, the various features shown in the embodiments may be used independently of each other in specific applications.

In the following figures, elements having the same function and/or the same structure will be referenced by the same reference signs.

In the drawings:
Figs 1 to 8 show preferred embodiments of high voltage interconnection systems according to the invention used in assemblies according to the invention;
Fig. 9 and Fig. 10 show further advantageous embodiments of assemblies according to the invention;
Figs 11 to 16 show preferred embodiments and details of connection elements according to the invention; and
Fig. 17 shows a schematic perspective view of a cable holder arrangement according to the invention.

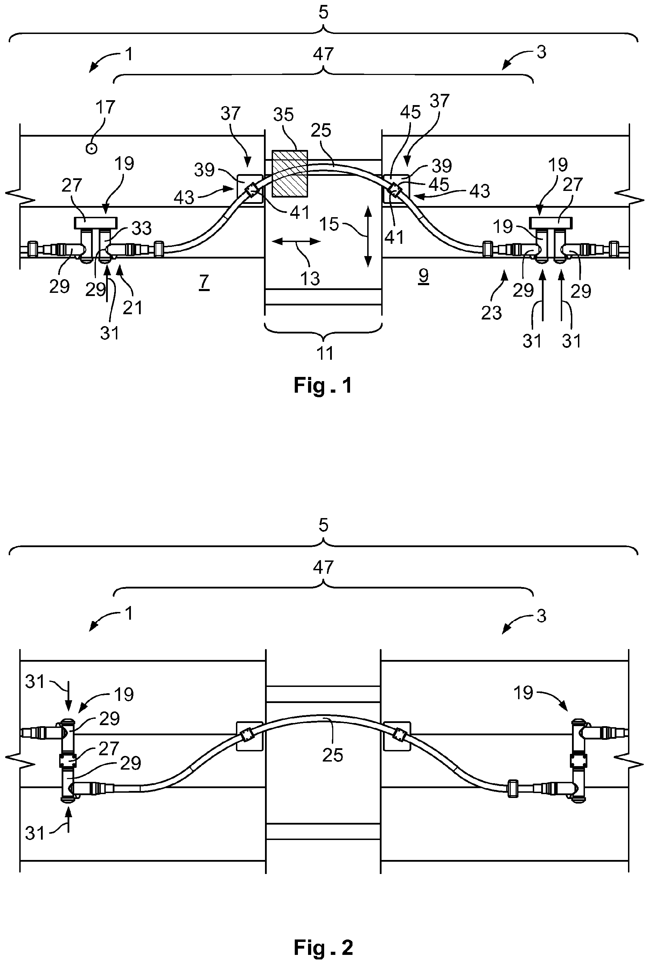

In the following, a first preferred embodiment of an assembly according to the invention which is provided with a high voltage interconnection system according to the invention is described with respect to Fig. 1.

Fig. 1 partially shows two train cars 1 and 3 which are arranged adjacent to each other and which are coupled with each other. The train cars 1 and 3 are part of an assembly 5 according to the invention. The trains 1 and 3 may in particular be part of a train.

Fig. 1 shows a top view onto the roofs 7 and 9 of the train cars 1 and 3. A region 11 is formed between the train cars 1 and 3 in which at least parts of the train cars 1 and 3 are spaced apart from each other. The train cars 1 and 3 are coupled with each other along a longitudinal direction 13 which generally is identical to a drive direction of a train and which is consequently parallel with the direction of tracks on which the train moves. A lateral direction 15 extends perpendicular to the longitudinal direction 13. Both the longitudinal direction 13 and the lateral direction 15 are parallel with a horizontal plane 35 which is only indicated by the hachure in Fig. 1. A vertical direction 17 is arranged perpendicular to the longitudinal direction 13 and the lateral direction 15 and is therefore parallel with the viewing axis as used in Fig. 1.

Each train car 1 and 3 is provided with a connection arrangement 19. Each connection arrangement 19 is connected to one of the ends 21 and 23 of a flexible cable 25. Thereby, the connection arrangements 19 are electrically interconnected via the flexible cable 25. Each connection arrangement 19 comprises a connection element 27 and at least one counter-connection element 29. The counter-connection elements 29 may in particular be screened separable connectors. The connection elements 27 are fixated on the roofs 7 and 9 of the train cars 1 and 3, whereas the counter-connection elements 29 are fixated to and electrically contacted to the corresponding ends 21 and 23 of the flexible cable 25.

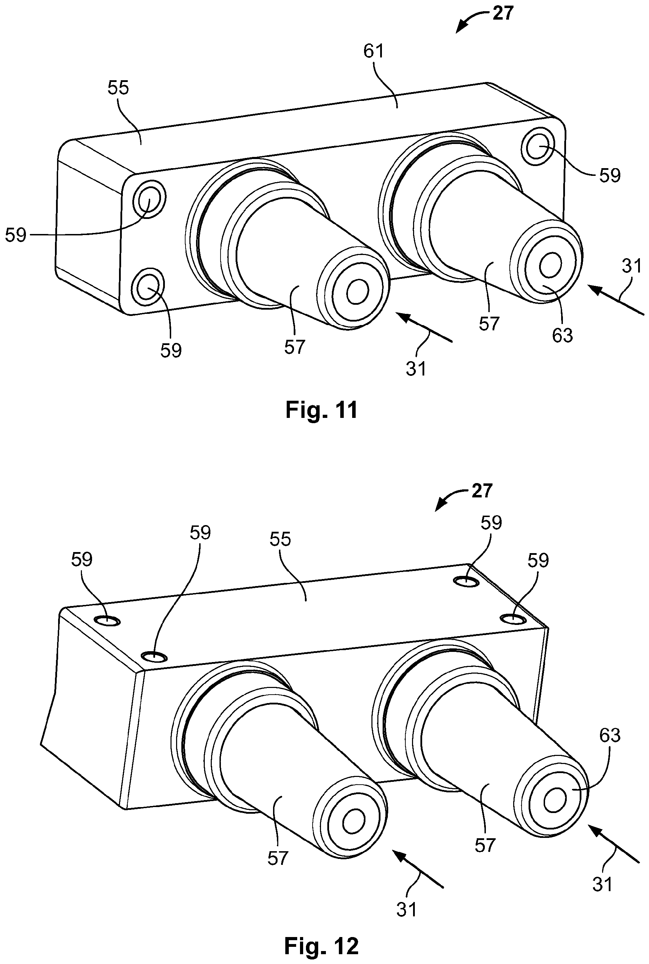

The connection elements 27 are provided with bushings which are formed complementary to the counter-connection elements 29 such that the connection elements 27 and the counter-connection elements 29 can be connected with each other in a pluggable manner. The bushing will be described later on with respect to Figs 11 to 16. The connection elements 27 of the first embodiment provide a U-shape such that two counter-connection elements 29 can be connected to one connection element 27. Plug directions 31 of the bushings extend parallel with the lateral direction 15 in the first embodiment. The counter-connection elements 29 are formed as T-shaped connectors, whose ends 33 are formed complementary to the bushings of the connection elements 27.

The flexible cable 25, the connection elements 27 and the counter-connection elements 29 are insulated to the outside, and have an outer conductive layer that is connected to ground potential, such that an unintentional contact with any of these elements does not necessarily lead to a contact with any high voltage conductive parts. In order to secure the position of the counter-connection elements 29 with a connection element 27, the counter-connection elements 29 may be secured with screws or bolts that can be engaged with internal threads in the bushings.

The flexible cable 25 extends along a curved path from the connection arrangement 19 of the train car 1 to the connection arrangement 19 of the other train car 3. The curved path of the flexible cable 25 basically extends along the horizontal plane 35 which is perpendicular to the longitudinal direction 13 and the lateral direction 15. The curved path allows the flexible cable 25 to react to movements of the train cars 1 and 3 relative to each other. Upon movement of the train cars 1 and 3, for example when the assembly 5 is moved along curved tracks, the flexible cable 25 is either compressed or uncompressed along the longitudinal direction 13. Due to the curved path, the flexible cable 25 will then react by moving along the lateral direction 15.

In order to allow a movement of the flexible cable 25 at least along the lateral direction 15 and the longitudinal direction 13, the assembly 5 is further provided with two cable holder arrangements 37. Each cable holder arrangement 37 is provided with a wear-plate 39 which is fixated to the corresponding train car 1 or 3, in particular to the roof 7 or 9, and a sliding collar 41 which is fixated to the flexible cable 25 in the region of the wear-plate 39. The flexible cable 25 is movable in the holding members 81 at least partially parallel with the horizontal plane 35, whereas a movement in the vertical direction 17 is prevented. Thereby, the flexible cable 25 can be held in a slidable manner.

The sliding collars 41 reduce friction between the flexible cable 25 and the wear-plates 39 and, at the same time, protect the flexible cable 25 from damages due to frictional forces. Each of the holding members 81 is provided with a guiding opening 43 which preferably extends along the longitudinal direction 13 through the holding member 81 and which opens up a space along the longitudinal direction 13 and the lateral direction 15. The sliding collar 41 and/or the wear-plate 39, preferably both, are made from a hard plastic material 45, for example a thermoplastic material.

In order to predefine the curved path of the flexible cable 25, the cable holder arrangement 35 and the corresponding connection arrangement 19 of each train car 1 and 3 are offset with respect to each other along the lateral direction 15.

The flexible cable 25, the connection arrangements 19 and the cable holder arrangements 37 together form a high voltage interconnection system 47 according to the invention.

In the following, further embodiments of the assembly 5 and/or the high voltage interconnection system 47 according to the invention are described. Thereby, only the differences to the aforementioned embodiments are described in detail for the sake of brevity.

In Fig. 2, another preferred embodiment of an assembly 5 with a high voltage interconnection system 47 is shown. The second embodiment differs from the first mentioned embodiment in that the connection arrangements 19 are not provided with U-shaped bushings but with an inline arrangement. Consequently, each connection arrangement 19 which is adapted for connecting two counter-connection elements 27 is provided with bushings that are arranged parallel with each other but with opposite plug directions 31. Also this embodiment allows the preferred horizontal arrangement, at least of the connection arrangements 19.

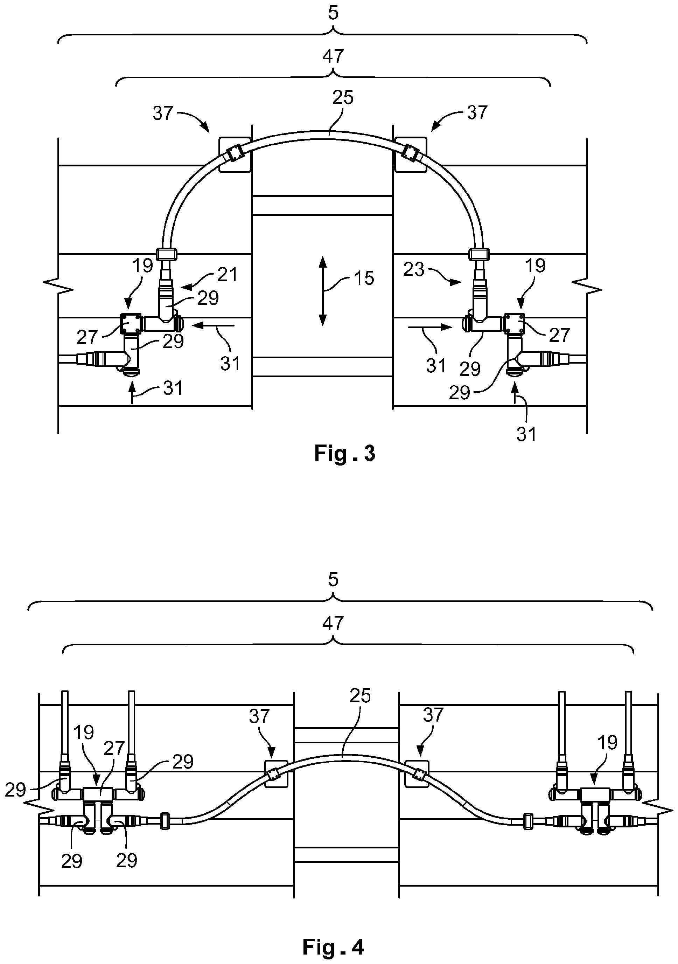

In Fig. 3, a high voltage interconnection system 47 and an assembly 5 are shown in which the connection arrangements 19 are adapted for forming 90° connections. Consequently, the plug directions 31 of one connection arrangement 19 are perpendicular to each other since the bushings of the connection elements 27 are arranged with a 90° angle relative to each other. The curved path of the flexible cable 25 in the third embodiment basically resembles the shape of a U. Thereby, the flexible cable 25 is, at least at its ends 21 and 23, arranged parallel with the lateral direction 15.

The fourth embodiment shown in Fig. 4 differs from the first embodiment shown in Fig. 1 in that the connection arrangements 19 provide 4-way connectors. The connection arrangements 19 comprise connection elements 27 which are each provided with four bushings for connecting four counter-connection elements 29. Thereby, two counter-connection elements 29 can be arranged adjacent to each other as in the first embodiment and two additional counter-connection elements 29 can be arranged opposite to each other as in the second embodiment. Or, in other words, each connection arrangement 19 resembles the shape of two 90° arrangements of the third embodiment which are connected with each other to form a 4-way connector.

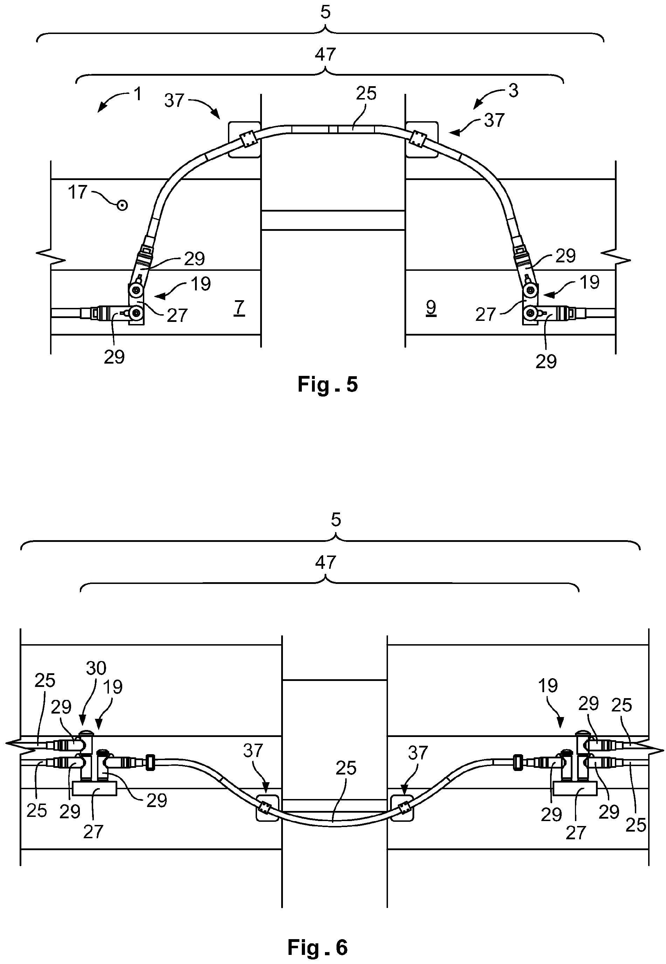

A fifth embodiment of a high voltage interconnection system 47 and of an assembly 5 is shown in Fig. 5. For the fifth embodiment, similar components are used as for the first embodiment as described with respect to Fig. 1 except for the connection arrangements 19 being provided with connection elements 27 that can be fixated on the roof 7 and 9 of the train cars 1 and 3 not in a horizontal, but in a vertical manner such that the plug directions 31 (not shown) are parallel with the vertical direction 17. The connection elements 27 are provided with U-shapes wherein the legs of the U extend parallel with the vertical direction 17 away from the corresponding roof 7 or 9 of the train cars 1 or 3.

In order to interconnect more than two cables 25 with a single connection arrangement 19 that is provided with U-shaped bushings as, for example, used in the embodiment as described with respect to Fig. 1, the counter connection elements 29 may be formed in an interconnectable manner. Such an embodiment is shown in Fig. 6. The connection elements 27 may be similar to the one as used in the first embodiment described with respect to figures 1. However, the counter connection elements 29 may differ from the aforementioned embodiments in that two counter connection elements 29 can be coupled to form a connection assembly 30. In particular, these counter-connection elements 29 may be screened separable coupling connectors.

Such a connection assembly 30 formed by two counter connection elements 29 can be connected to a single bushing of the connection element 27. In the embodiment of Fig. 6, each of the connection arrangements 19 is provided with one connection assembly 30 such that each connection arrangement 19 is used for interconnecting three cables 25 with each other. It is, however, also possible to provide each connection arrangement 19 with two connection assemblies 30 such that four cables 25 can be interconnected electrically interconnected with each other.

It should be noted that a connection assembly 30 as described above can be combined with all embodiments of the assembly 5 and the system 47.

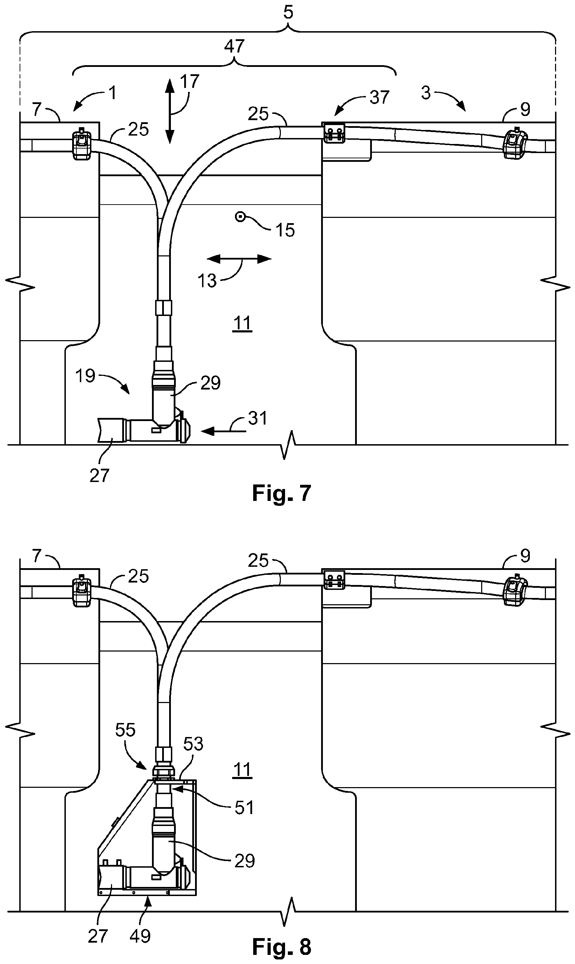

In Fig. 7, another embodiment of an assembly 5 with a high voltage interconnection system 47 according to the invention is shown. For better visibility, Fig. 7 shows a side view parallel with the lateral direction 15. Here, the high voltage interconnection system 47 comprises one connection arrangement 19 which is arranged between the two train cars 1 and 3 or, in other words, in the region 11. The connection element 27 of the connection arrangement 19 is fixated to the train car 1 such that the bushings of the connection arrangement 19 extend parallel with the longitudinal direction 13.

The connection element 27 can be connected to two counter-connection elements 29. Thereby, one counter-connection element 29 is connected with a flexible cable 25 that extends vertically from the connection arrangement 19 and onto the roof 7 of the train car 1. A second counter-connection element 29 is connected to a flexible cable 25 which extends vertically away from the connection arrangement 19 and then onto the roof 9 of the opposite train car 3. Said flexible cable 25 extends through a cable holder arrangement 37 on the roof 9 of the train car 3.

In Fig. 8, an eighth embodiment of an assembly 5 with a high voltage interconnection system 47 is shown. The seventh embodiment differs from the aforementioned sixth embodiment in that the connection arrangement 19 is housed in a protection cover 49. The protection cover 49 preferably houses the connection element 27 and the counter-connection elements 29 when the same are connected to the connection element 27.

The protection cover 49 may be provided with through holes 51 for feeding the flexible cable 25 through a wall 53 of the protection cover 49. In order to prevent debris or water from entering the protection cover 49 through the through holes 51, the protection cover 49 is further provided with a sealing arrangement 54 which may surround the flexible cables 25 and which closes gaps between the flexible cables 25 and the wall 53 in the region of the through holes 51.

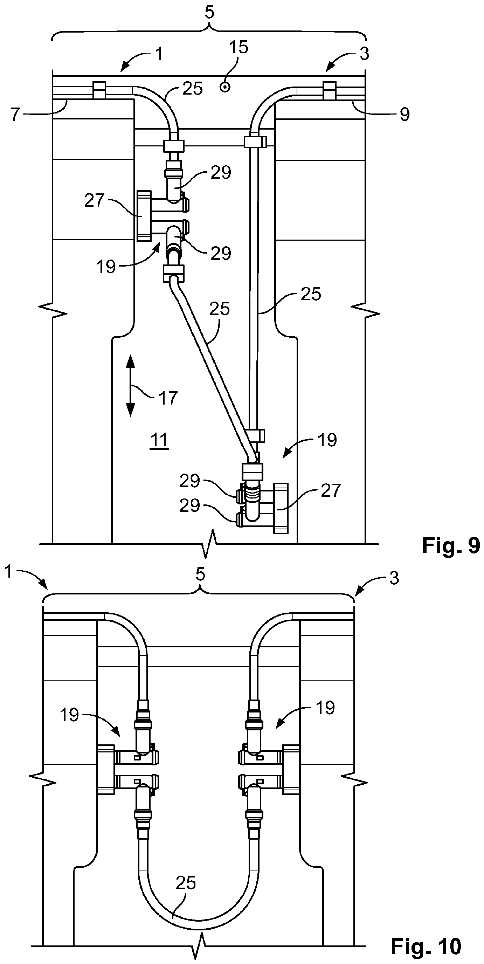

A further embodiment of an assembly 5 according to the invention is shown in Fig. 9 wherein, as in Figs 7 and 8, the viewing axis is parallel with the lateral direction 15.

The embodiment as shown in Fig. 9 differs from the embodiments as described with respect to Figs 7 and 8 in that two connection arrangements 19 are arranged in the region 11 between the two train cars 1 and 3. Thereby, one connection arrangement 19 is arranged on each of the train cars 1 and 3.

Both connection arrangements 19 are fixated with their connection element 27 on one of the train cars 1 and 3, thereby being arranged opposite to each other and offset along the vertical direction 17 with respect to each other. Each connection arrangement 19 is provided with two bushings for connecting two counter-connection elements 29. Thereby, each connection arrangement 19 is provided with a counter-connection element 29 that is connected to a flexible cable 25 that extends from its connection arrangement 19 on the roof 7 or 9 of the corresponding train car 1 or 3.

In order to establish an electrical connection along a train or, in other words, in order to electrically interconnect the two train cars 1 and 3, the two connection arrangements 19 are interconnected via a flexible cable 25 which is provided with a counter-connection element 29 on each end. When the two train cars 1 and 3 move with respect to each other, only the flexible cable 25 which interconnects both connection arrangements 19 is deformed. Consequently, the other two flexible cables 25 which extend directly up to the roofs 7 and 9 of the corresponding train cars 1 and 3 will not be deformed. Therefore, cable holder arrangements 37 may be omitted.

A further embodiment of an assembly 5 according to the invention is shown in Fig. 10. This embodiment differs from the embodiment as described with respect to Fig. 9 in that the two connection arrangements 19 are arranged opposite to each other along the longitudinal direction 13 such that a flexible cable 25 which interconnects both connection arrangements 19 extends along a U-shape between both train cars 1 and 3.

In the following, connection elements 27 which are used in the embodiments as discussed before with respect to Figs 1 to 10 are described in greater detail with respect to Figs 11 to 16.

In Fig. 11, a connection element 27 is shown which may be used in the connection arrangements 19 of the embodiments as described with respect to Figs 5 to 10. The connection element 27 is provided with a base 55 from which two bushings 57 extend away. The direction in which each bushing 57 extends from the base 55 defines the plug direction 31 along which a counter connection element 29 (not shown here) can be connected to the bushings 57.

The base 55 is provided with mounting openings 59 which extend through the base 55 and which can be used for mounting the connection element 27 to an object, such as a roof or a wall of a train car. For example, a mounting element such as a screw or a bolt may be inserted through a mounting opening 59 in order to fixate the connection elements 27 to an object. In the embodiment which is shown in Fig. 11, the mounting openings 59 extend parallel with the plug direction 31 through the base 55. Consequently, if such connection element is fixated on a roof as in the embodiment of the system 47 which is described with respect to Fig. 5, the plug direction will extend vertically.

The connection element 27 is provided with an insulating casing 61 which basically surrounds a conductive element 63 inside the connection element 27. Inside the insulating casing 61, a conductive element 63 is arranged to which electrically conductive counterparts of the counter connection elements 29 can be electrically connected. Preferably, the bushings 57 are adapted for electrically interconnecting counter connection elements 29 i.e. the corresponding flexible cables 25 with each other when said elements 29 are connected to the bushings 57 of the connection element 27.

In Fig. 12, another embodiment of a connection element 27 is shown which differs from the aforementioned embodiment in that the mounting openings 59 extend perpendicular to the plug direction 31 through the base 55. Such an embodiment may be used in the high voltage interconnection system 47 which is described with respect to Fig. 1. If such a connection element 27 is mounted on a roof of the train, the plug directions 31 of the bushings 57 extend basically horizontally and therefore allow a compact arrangement.

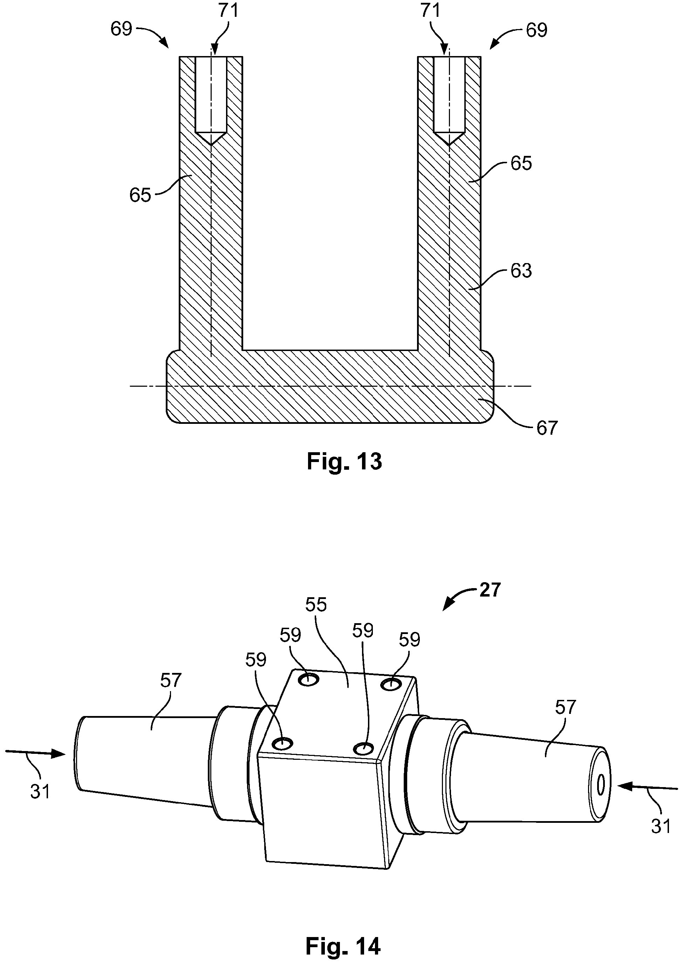

A conductive element 63 which is used in the connection elements 27 as described with respect to Figs. 11 and 12 is shown in Fig. 13. The conductive element 63 is made from an electrically conductive material, preferably a material mostly containing copper. The conductive element 63 has the overall shape of a U. Thereby, two legs 65 of the U-shape extend parallel with each other from a bottom portion 67. The bottom portion 67 extends perpendicular to longitudinal directions of the legs 65. Free ends 69 of the legs 65 are provided with blind holes 71 which extend into the legs 65 parallel with the longitudinal directions of the legs 65. The blind holes 71 are internally threaded.

When the conductive element 63 is arranged inside the insulating casing 61, the legs 65 are part of the bushings 57 and the bottom portion 67 forms a part of the base 55 of the connection element 27. Parts of the free ends 69 may be accessible from outside the connection element 27 in order to establish an electrical connection with conductive parts of a counter connection element 29. The blind holes 71 which are internally threaded can be used for securing the position of the counter connection elements 29 with a bolt or a screw.

In the following, further preferred embodiments of connection elements 27 are described with respect to Figs. 14 to 16. Thereby, only the differences compared to the embodiments described with respect to Figs. 11 and 12 are discussed in detail for the sake of brevity. It should further be noted that each of the connection elements 27 is preferably provided with a conductive element 63 having a basically similar structure as the one described with respect to Fig. 13, but differs in the directions of the legs due to the different arrangement of the bushings and may also differ in the number of the legs due to a different amount of bushings.

In Fig.14, a connection element 27 is shown which can be used for an in-line arrangement as for example described with respect to Fig. 2. Two bushings 57 extend away from each other in a parallel manner, but in opposite directions and in line with the oppositely orientated plug directions 31. The base 55 is arranged between both bushings 57 and is provided with mounting openings 59 extending perpendicular to the plug direction 31.

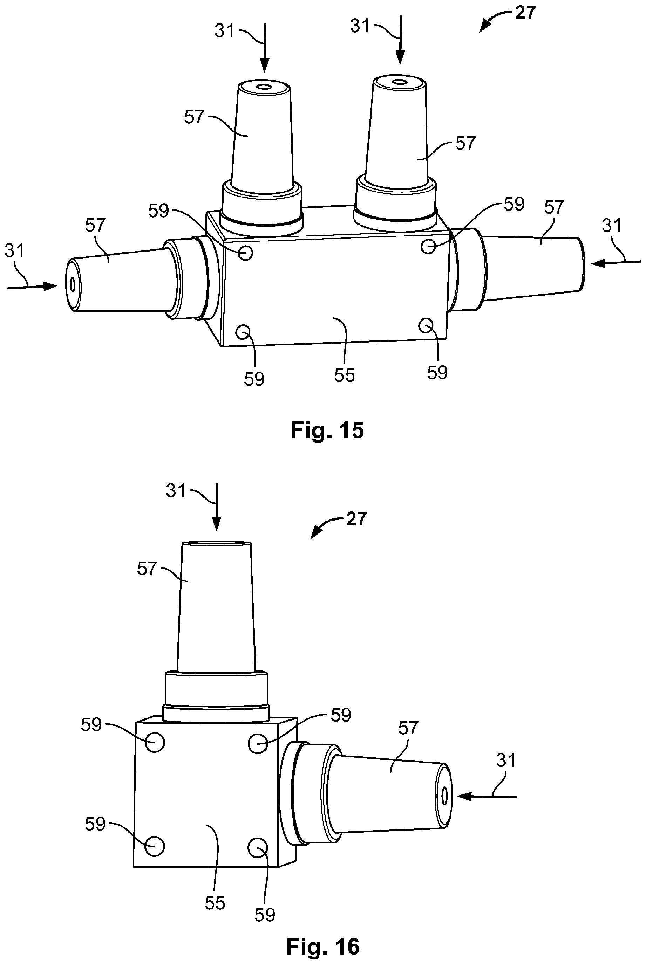

The embodiment of the connection element 27 as shown in Fig. 15 can be used for connecting four counter connection elements 29. Consequently, this embodiment is provided with four bushings 57. The arrangement of the bushings 57 basically follows a combination of the embodiments as described with respect to Fig. 12 and Fig. 14. Consequently, two bushings 57 extend away from the base 55 next to each other, whereas two further bushings 57 extend perpendicular to the aforementioned bushings 57 parallel with each other but in opposite directions, thereby forming an in-line arrangement. The base 55 is provided with mounting openings 59 which extend perpendicular to the plug directions 31 of the bushings 57. Such an embodiment may be used in the system 47 as described with respect to Fig. 4.

Finally, the embodiment of a connection element 27 as shown in Fig. 16 is provided with two bushings 57 which are arranged perpendicular to each other in order to form a 90° arrangement. The base 55 is provided with mounting openings 59 which extend perpendicular to the plug directions 31 of the bushings 57 through the base 55. This embodiment of a connection element 27 can be used in a system 47 as described with respect to Fig. 3.

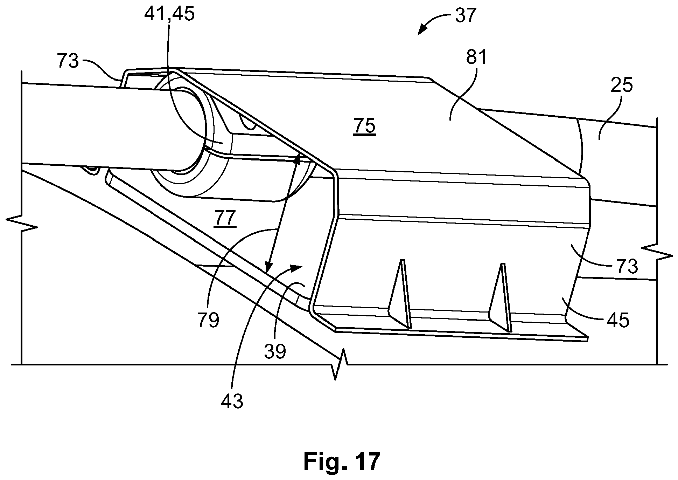

In the following, a cable holder arrangement 37 which is used in the embodiments of the assembly 5 and the high voltage interconnection system 47 as described with respect to Figs. 1 to 8 is described with respect to Fig. 17. The cable holder arrangement 37 comprises a sliding collar 41 which is fixated on the flexible cable 25. The flexible cable 25 with the sliding collar 41 extends through the guiding opening 43 of a holding member 81 such that the sliding collar 41 is arranged inside the holding member 81.

The holding member 81 provides a cage- or frame-like structure which is formed by two side walls 73 which are arranged opposite to each other and a top wall 75 which interconnects the two side walls 73. The wear plate 39 forms a bottom wall 77 of the arrangement 37. The side walls 73, the wear plate 39 and the top wall 75 surround the tunnel-like guiding opening 43.

A distance 79 between the top wall 75 and the top of the wear-plate 39 is preferably larger than a diameter of the sliding collar 41 in order to allow a movement of the flexible cable 25 with the sliding collar 41 between the walls 73 and 75 and the wear-plate 39. The cable holder arrangement 37 allows a movement of the flexible cable 25 parallel with the top wall 75 but not perpendicular to the same. Thereby, the flexible cable 25 is held in a slidable manner by the cable holder arrangement 37.

### REFERENCE SIGNS

- 1: train car
- 3: train car
- 5: assembly
- 7: roof
- 9: roof
- 11: region
- 13: longitudinal direction
- 15: lateral direction
- 17: vertical direction
- 19: connection arrangement
- 21: end
- 23: end
- 25: flexible cable
- 27: connection element
- 29: counter-connection element
- 30: connection assembly
- 31: plug direction
- 33: end
- 35: horizontal plane
- 37: cable holder arrangement
- 39: wear-plate
- 41: sliding collar
- 43: guiding opening
- 45: plastic material
- 47: high voltage interconnection system
- 49: protection cover
- 51: through hole
- 53: wall
- 54: sealing arrangement
- 55: base
- 57: bushing
- 59: mounting opening
- 61: insulating casing
- 63: conductive element
- 65: leg
- 67: bottom portion
- 69: free end
- 71: blind hole
- 73: side wall
- 75: top wall
- 77: bottom wall
- 79: distance
- 81: holding member

## Claims

1. Assembly (5), comprising at least two train cars (1, 3) which are coupled with each other, wherein at least one train car (1, 3) is provided with at least one connection arrangement (19) for electrically contacting one end (21, 23) of at least one flexible cable (25), the at least one connection arrangement (19) comprising at least one connection element (27) being fixated to the corresponding train car (1, 3), wherein at least one flexible cable (25) is electrically connected to the at least one connection arrangement (19) and extends at least towards the other train car (1, 3), wherein at least one of the train cars (1, 3) is provided with at least one cable holder arrangement (37) which holds the at least one flexible cable (25) in a slidable manner, wherein the at least one cable holder arrangement (37) comprises at least one holding member (81) comprising at least one guiding opening (43) for receiving the at least one flexible cable (25) at least in parts, the holding member (81) providing a cage- or frame-like structure which is formed by two side walls (73) which are arranged opposite to each other and a top wall (75) which interconnects the two side walls (73), and wherein the at least one cable holder arrangement (37) comprises at least one sliding collar (41) fixated on the flexible cable (25), **characterized in that** the flexible cable (25) with the sliding collar (41) extends through the guiding opening (43) of the holding member (81) such that the sliding collar (41) is arranged inside the holding member (81), wherein the at least one flexible cable (25) with the sliding collar (41) is held by the at least one holding member (81) such that a vertical movement is prevented but a horizontal movement at least partially allowed.

2. Assembly (5) according to claim 1, wherein each train car (1, 3) is provided with at least one connection arrangement (19), the connection arrangements (19) of the train cars (1, 3) being interconnected by the at least one flexible cable (25).

3. Assembly (5) according to claim 2, wherein the at least one flexible cable (25) is arranged basically horizontal, at least in a region (11) between the at least two connection arrangements (19).

4. Assembly (5) according to claim 3, wherein at least one of the connection arrangements (19) comprises at least one connection element (27) and at least one counter connection element (29) which are formed as complementary plug connectors with a basically horizontally aligned plug direction (31).

5. Assembly (5) according to any of claims 2 to 4, wherein the at least one flexible cable (25) is arranged along a curved path at least in a region (11) between the at least two connection arrangements (19), the curved path extending along a horizontal plane (35).

6. Assembly (5) according to any of claims 1 to 5, wherein the at least one cable holder arrangement (37) and the at least one connection arrangement (19) are offset with respect to each other along a lateral direction (15) perpendicular to a drive direction.

7. Assembly (5) according to any of claims 1 to 5, wherein the at least one connection arrangement (19) is arranged between the at least two train cars (1, 3).

8. Assembly (5) according to any of claims 1 to 7, wherein the at least one cable holder arrangement (37) comprises at least one wear plate (39) being in slidable contact with the at least one sliding collar (41).

9. Assembly (5) according to claim 8, wherein the wear plate (39) forms a bottom wall (77) of the arrangement (37) and the side walls (73), the wear plate (39) and the top wall (75) surround the tunnel-like guiding opening (43).

10. Assembly (5) according to any of claims 1 to 9, wherein the at least one holding member (81), the at least one wear-plate (39) and/or the at least one sliding collar (41) are made from a plastic material (45).

11. Assembly (5) according to any of claims 1 to 10, the system (47) further comprising at least one protection cover (49) for the at least one connection arrangement (19).

## Patentansprüche

1. Baugruppe (5), die wenigstens zwei Zugwagen (1, 3) umfasst, die miteinander gekoppelt sind, wobei wenigstens ein Zugwagen (1, 3) mit wenigstens einer Verbindungsanordnung (19) zum Herstellen von elektrischem Kontakt eines Endes (21, 23) wenigstens eines flexiblen Kabels (25) versehen ist, die wenigstens eine Verbindungsanordnung (19) wenigstens ein an dem entsprechenden Zugwagen (1, 3) befestigtes Verbindungselement (27) umfasst, wobei das wenigstens eine flexible Kabel (25) mit der wenigstens einen Verbindungsanordnung (19) elektrisch verbunden ist und sich wenigstens in Richtung des anderen Zugwagens (1, 3) erstreckt, wenigstens einer der Zugwagen (1, 3) mit wenigstens einer Kabel-Halteranordnung (37) versehen ist, die das wenigstens eine flexible Kabel (25) verschiebbar hält, die wenigstens eine Kabel-Halteranordnung (37) wenigstens ein Halteelement (81) umfasst, das wenigstens eine Führungsöffnung (43) umfasst, mit der das wenigstens eine flexible Kabel (25) wenigstens teilweise aufgenommen wird, wobei das Halteelement (81) eine käfig- oder rahmenartige Struktur bildet, die durch zwei einander gegenüberliegend angeordnete Seitenwände (73) und eine die zwei Seitenwände (73) miteinander verbindende Oberwand (75) gebildet wird, und die wenigstens eine Kabel-Halteranordnung (37) wenigstens eine an dem flexiblen Kabel (25) befestigte Gleitmuffe (41) aufweist, **dadurch gekennzeichnet, dass** sich das flexible Kabel (25) mit der Gleitmuffe (41) so durch die Führungsöffnung (43) des Halteelementes (81) erstreckt, dass die Gleitmuffe (41) im Inneren des Halteelementes (81) angeordnet ist, wobei das wenigstens eine flexible Kabel (25) mit der Gleitmuffe (41) von dem wenigstens einen Halteelement (81) so gehalten wird, dass eine vertikale Bewegung verhindert wird, eine horizontale Bewegung jedoch wenigstens teilweise zugelassen wird.

2. Baugruppe (5) nach Anspruch 1, wobei jeder Zugwagen (1, 3) mit wenigstens einer Verbindungsanordnung (19) versehen ist und die Verbindungsanordnungen (19) der Zugwagen (1, 3) durch das wenigstens eine flexible Kabel (25) miteinander verbunden sind.

3. Baugruppe (5) nach Anspruch 2, wobei das wenigstens eine flexible Kabel (25) wenigstens in einem Bereich (11) zwischen den wenigstens zwei Verbindungsanordnungen (19) im Wesentlichen horizontal angeordnet ist.

4. Baugruppe (5) nach Anspruch 3, wobei wenigstens eine der Verbindungsanordnungen (19) wenigstens ein Verbindungselement (27) und wenigstens ein Gegen-Verbindungselement (29) umfasst, die als komplementäre Steckverbinder mit einer im Wesentlichen horizontal ausgerichteten Steckrichtung (31) ausgebildet sind.

5. Baugruppe (5) nach einem der Ansprüche 2 bis 4, wobei das wenigstens eine flexible Kabel (25) wenigstens in einem Bereich (11) zwischen den wenigstens zwei Verbindungsanordnungen (19) entlang einer gekrümmten Bahn angeordnet ist, wobei die gekrümmte Bahn entlang einer horizontalen Ebene (35) verläuft.

6. Baugruppe (5) nach einem der Ansprüche 1 bis 5, wobei die wenigstens eine Kabel-Halteranordnung (37) und die wenigstens eine Verbindungsanordnung (19) in einer Querrichtung (15) senkrecht zu einer Antriebsrichtung zueinander versetzt sind.

7. Baugruppe (5) nach einem der Ansprüche 1 bis 5, wobei die wenigstens eine Verbindungsanordnung (19) zwischen den wenigstens zwei Zugwagen (1, 3) angeordnet ist.

8. Baugruppe (5) nach einem der Ansprüche 1 bis 7, wobei die wenigstens eine Kabel-Halteranordnung (37) wenigstens eine Verschleißplatte (39) umfasst, die in gleitendem Kontakt mit der wenigstens einen Gleitmuffe (41) ist.

9. Baugruppe (5) nach Anspruch 8, wobei die Verschleißplatte (39) eine Bodenwand 77) der Anordnung (37) bildet und die Seitenwände (73), die Verschleißplatte (39) und die Oberwand (75) die tunnelartige Führungsöffnung (43) umgeben.

10. Baugruppe (5) nach einem der Ansprüche 1 bis 9, wobei das wenigstens eine Halteelement (81), die wenigstens eine Verschleißplatte (39) und/oder die wenigstens eine Gleitmuffe (41) aus einem Kunststoffmaterial (45) bestehen.

11. Baugruppe (5) nach einem der Ansprüche 1 bis 10, wobei das System (47) des Weiteren wenigstens eine Schutzabdeckung (49) für die wenigstens eine Verbindungsanordnung (19) umfasst.

## Revendications

1. Ensemble (5) comprenant au moins deux wagons de train (1, 3) qui sont accouplés entre eux, dans lequel au moins un wagon de train (1, 3) est pourvu d'au moins un agencement de connexion (19) pour contacter électriquement une extrémité (21, 23) d'au moins un câble flexible (25), ledit au moins un agencement de connexion (19) comprenant au moins un élément de connexion (27) fixé au wagon de train correspondant (1, 3), dans lequel au moins un câble flexible (25) est connecté électriquement audit au moins un agencement de connexion (19) et s'étend au moins vers ledit autre wagon de train (1, 3), dans lequel au moins l'un des wagons de train (1, 3) est pourvu d'au moins un agencement de maintien de câble (37) qui maintient ledit au moins un câble flexible (25) de manière coulissante, dans lequel ledit au moins un agencement de maintien de câble (37) comprend au moins un élément de maintien (81) comprenant au moins une ouverture de guidage (43) pour recevoir ledit au moins un câble flexible (25) au moins en partie, l'élément de maintien (81) fournissant une structure en forme de cage ou d'armature qui est formée par deux parois latérales (73) agencées de manière opposée entre elles et une paroi supérieure (75) qui connecte entre elles les deux parois latérales (73), et dans lequel ledit au moins un agencement de maintien de câble (37) comprend au moins un collier coulissant (41) fixé sur le câble flexible (25), **caractérisé en ce que** le câble flexible (25) avec le collier coulissant (41) s'étend à travers l'ouverture de guidage (43) de l'élément de maintien (81) de telle sorte que le collier coulissant (41) est agencé à l'intérieur de l'élément de maintien (81), dans lequel ledit au moins un câble flexible (25) avec le collier coulissant (41) est maintenu par ledit au moins un élément de maintien (81) de telle sorte qu'un mouvement vertical est évité mais qu'un mouvement horizontal est au moins partiellement permis.

2. Ensemble (5) selon la revendication 1, dans lequel chaque wagon de train (1, 3) est pourvu d'au moins un agencement de connexion (19), les agencements de connexion (19) des wagons de train (1, 3) étant connectés entre eux par ledit au moins un câble flexible (25).

3. Ensemble (5) selon la revendication 2, dans lequel ledit au moins un câble flexible (25) est agencé de manière essentiellement horizontale, au moins dans une région (11) comprise entre lesdits au moins deux agencements de connexion (19).

4. Ensemble (5) selon la revendication 3, dans lequel au moins l'un des agencements de connexion (19) comprend au moins un élément de connexion (27) et au moins un élément de contre-connexion (29) qui sont formés comme des connecteurs enfichables complémentaires, avec une direction d'enfichage alignée de manière essentiellement horizontale (31) .

5. Ensemble (5) selon l'une quelconque des revendications 2 à 4, dans lequel ledit au moins un câble flexible (25) est agencé le long d'un chemin incurvé au moins dans une région (11) comprise entre lesdits au moins deux agencements de connexion (19), le chemin incurvé s'étendant le long d'un plan horizontal (35).

6. Ensemble (5) selon l'une quelconque des revendications 1 à 5, dans lequel ledit au moins un agencement de maintien de câble (37) et ledit au moins un agencement de connexion (19) sont décalés entre eux dans une direction latérale (15) perpendiculaire à la direction de déplacement.

7. Ensemble (5) selon l'une quelconque des revendications 1 à 5, dans lequel ledit au moins un agencement de connexion (19) est agencé entre lesdits au moins deux wagons de train (1, 3).

8. Ensemble (5) selon l'une quelconque des revendications 1 à 7, dans lequel ledit au moins un agencement de maintien de câble (37) comprend au moins une plaque d'usure (39) en contact coulissant avec ledit au moins un collier coulissant (41).

9. Ensemble (5) selon la revendication 8, dans lequel la plaque d'usure (39) forme une paroi inférieure (77) de l'agencement (37), et les parois latérales (73), la plaque d'usure (39) et la paroi supérieure (75) entourent l'ouverture de guidage de type tunnel (43).

10. Ensemble (5) selon l'une quelconque des revendications 1 à 9, dans lequel ledit au moins un élément de maintien (81), ladite au moins une plaque d'usure (39) et/ou ledit au moins un collier coulissant (41) sont constitués d'un matériau plastique (45).

11. Ensemble (5) selon l'une quelconque des revendications 1 à 10, le système (47) comprenant en outre au moins un couvercle de protection (49) pour ledit au moins un agencement de connexion (19).
